# EUROPEAN PATENT APPLICATION

(11) **EP 1 503 296 A1**
(43) Date of publication of application: **02.02.2005**
(21) Application number: 03017247.2
(22) Date of filing: 30.07.2003
(51) Int. Cl.: G06F 17/30

(54) **Computer implemented method for retrieving data from a data storage system and according computer program product and data storage system**

(71) Applicant: SAP Aktiengesellschaft, 69190 Walldorf (DE)
(72) Inventor: Sauermann, Volker, 69120 Heidelberg (DE); Schwarz, Arne, 69117 Heidelberg (DE); Von Bergen, Axel, 69168 Wiesloch (DE)
(74) Representative: Hübner, Gerd, Dipl.-Phys.

(57) **Abstract**

A computer implemented method for storing data in and retrieving data from a data storage system comprises the steps of calculating a dynamic bitmap data structure (7B) for at least one result set of a defined query condition concerning a data attribute included in a first query, storing said calculated bitmap data structure (7B) associated to said defined query condition in a cache memory of said data storage system, and accessing to said calculated bitmap data structure (7B) stored in said cache memory means to process at least a second query including said defined query condition.

## Description

### Field of the Invention

The invention refers to a computer implemented method for storing data in and retrieving data from a data storage system, to a computer program product for storing data in and retrieving data from a data storage system and to such data storage systems implementing aforesaid method.

### Background of the Invention

The present invention is relevant for the field of data bases, especially data base systems handling huge numbers of data. In this connection the patent applications WO 02/061612 A2 and WO 02/061613 A2 disclose - amongst others - such data base systems, data structures used therein and query optimizers for such data base systems. The disclosure of both these applications is incorporated herein by reference. These applications especially reflect storage and query strategies based on balanced binary trees.

Furtheron reference is made to European patent application No. 03 015 365.4 (prior art according to article 54(3) EPC), which basically discloses the method of storing certain query results as bitmaps, which is a very simple and machine-oriented strategy of storing data. Again the contents of this older patent application is incorporated herein by reference.

### Summary of the invention

It is an object of the invention to provide a method for storing data in and retrieving data from a data storage system, an according computer program product and data storage system, which effectively reduce the processing time of a query to be handled by the data storage system.

This object is met by a computer implemented method for storing data in and retrieving data from a data storage system according to the invention, comprising the steps of
- calculating a dynamic bitmap data structure for at least one result set of a defined query condition concerning a data attribute included in a first query,
- storing said calculated bitmap data structure associated to said defined query condition in a cache memory of said data storage system, and
- accessing to said calculated bitmap data structure stored in said cache memory means to process at least a second query including said defined query condition.

The object is further met by a computer program product for storing data in and retrieving data from a data storage system comprising a plurality of instructions which, when loaded into a memory of the data storage system, cause at least one processor of the data storage system to execute the steps of aforesaid computer implemented method.

Furtheron this object is met by a data storage system comprising
- at least one processor as control and central processing unit,
- a program and primary memory associated to said processor,
- an interface to receive a query defining a query condition concerning a data attribute and to output a result of said query to a user,
- a data memory to store data, at least part of which is a cache memory to store and retrieve calculated bitmap data structures implementing the above mentioned method.

The advantages of the invention are caused by the fact that basically the calculation of bitmaps can be rather extensive and time-consuming especially in case that a query condition refers to a range of a data attribute, since first all the available bitmaps in the relevant substructure must be combined with OR and then in the resulting bitmap the bits for the remaining nodes representing aforesaid tree structure of the data storage must be set.

Inasmuch it makes sense not to delete such extensively - and thus expensively - calculated bitmaps immediately after the processing of a query but to keep them at least for a while in the data storage system. This is achieved by storing such calculated bitmap data structures in a cache memory of said data storage system. In case of later queries, which include the defined query condition represented by the cache-stored bitmap data structure the data storage system is able to access to said calculated bitmap data structure and to process said second query including the defined query condition. Accordingly the calculation and handling time for recalculating said bitmap data structure is saved.

The bitmap cache memory according to the invention solves the problem that many users of data storage systems often change just one condition within a series of queries including several conditions from one query step to the next query step. For example after the query "color = red AND XSEXF=1 AND BIRTHDT > 1960" in the next step the query is "color = green AND XSEXF=1 AND BIRTHDT > 1960", i.e. only the first condition was changed. For the execution of this next query all three conditions must be executed again, but at this second time the dynamically calculated bitmap for "BIRTHDT > 1960" already exists and is stored in the cache memory, it need not be calculated again. The query can thus be processed much faster.

In practice the appearance of identical individual conditions in sequential queries is much more probable than the re-appearance of an entire query with N conditions. Inasmuch it is not worth keeping the bitmap for a complete query but it makes sense to keep the bitmaps for each individual condition in the cache memory, whenever they are not already stored in an attribute tree structure as static bitmaps.

The invention also meets the problems of repeatedly used identical parts of queries, which e.g. occur when a user begins with one condition in a query, restricts the result with a second condition, then with a third condition etc. The search is restricted more and more with new conditions, but as the previous conditions do not change the formerly calculated bitmaps stored in the cache memory can be used and only the results of the new condition have to be calculated.

### Brief Description of the Drawings

- Fig. 1: is a diagram of a tree structure representing a data attribute "color" including so-called rings,
- Fig. 2: is a diagram according to Fig. 1 in which some large rings are replaced by bitmaps,
- Fig. 3: is a schematic representation of a query with tree conditions reflecting the attribute tree structures of three attributes, and
- Fig. 4: is a schematic diagram of a query reflecting the creation of a result bitmap.

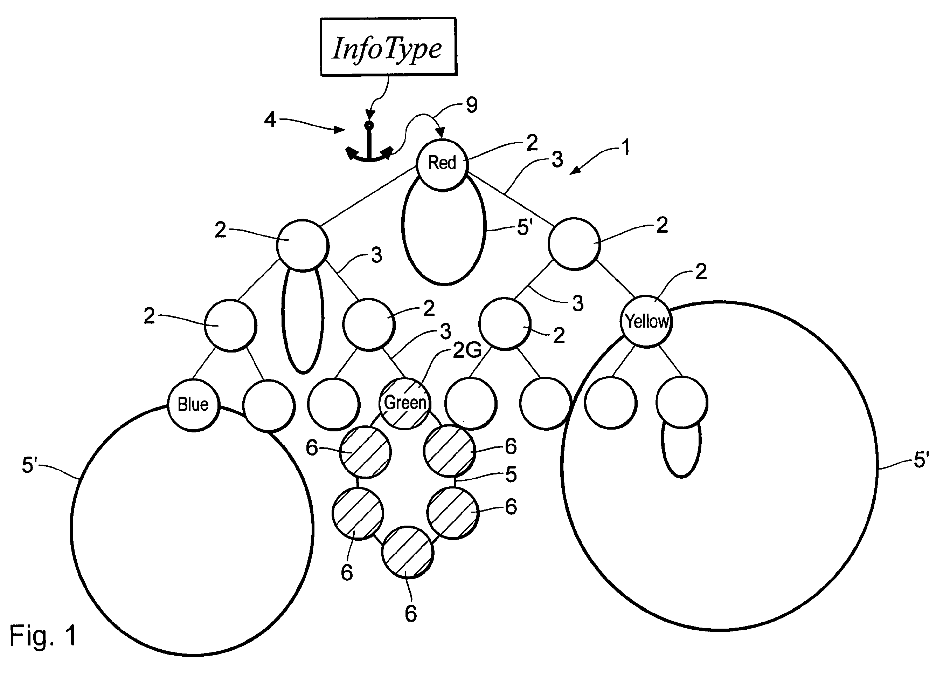

Fig. 1 shows an attribute tree 1 consisting of nodes 2 and branches 3 arranged as a so-called binary tree. Each node 2 represents a certain value of the attribute "color", which attribute is so-called "InfoType" data structure in the data storage system applications of the applicant. The attribute tree 1 is linked to the data structure used in the data storage system by an anchor 4 which is broadly discussed in WO 02/061612 A2.

At the nodes 2 representing the color attributes "red", "blue", "green", "yellow" etc. there are attached so-called rings 5 which represent data elements having the same value, like "green" at the node 2G. This master node 2G plus the further five nodes 6 in the ring 5 have the same attribute value "green". Each individual node 2G, 6 of the ring 5 represents exactly one dataset, in which the attribute color with the value "green" appears. The same principle applies for the other color values and in general for any other attribute for which the same value can appear repeatedly. These other rings 5' are represented as circle in Fig. 1. This drawing figure also symbolizes that the rings 5, 5' can have various sizes, i.e. different numbers of nodes.

In this connection attention is to be drawn to the fact that in such tree structures nodes may have no rings, e.g. if the node represents a unique attribute, like a single costumer number in a client administration program. On the other hand there may be attribute trees with a small number of large rings, e.g. data structures which represent flags - such as the gender -, countries and the like. In this case most of the nodes are not found in the tree branches, but in the rings that are attached to the master nodes of the tree.

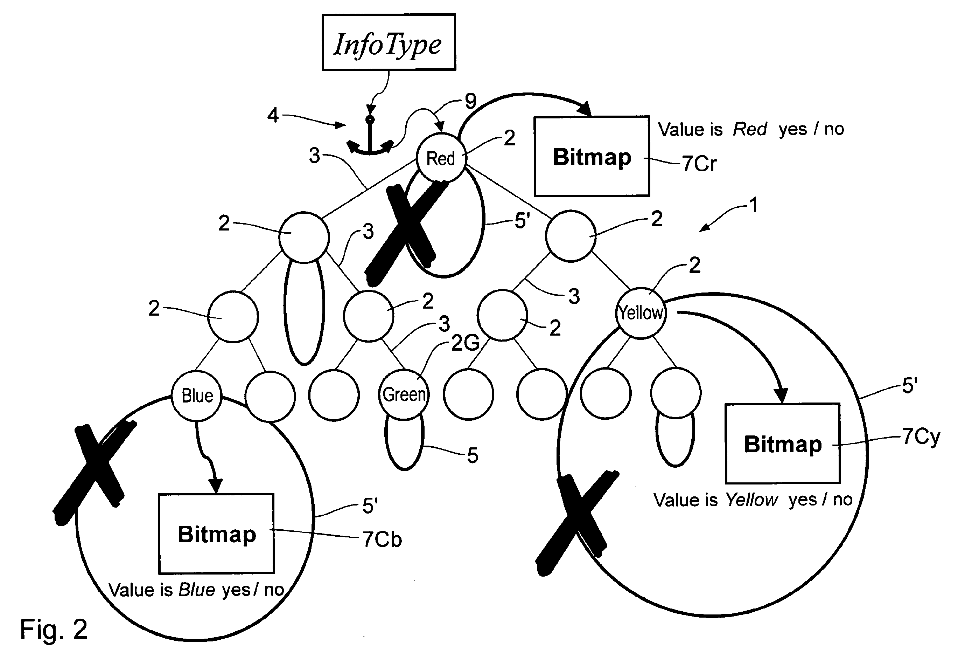

Now the storage and processing of queries is more effective in case when large rings are replaced by bitmaps. This is shown in Fig. 2 in which the large rings 5 attached to the red, blue and yellow master nodes 2 are replaced by bitmaps 7Cr, 7Cb, 7Cy. The ring 5 attached to node 2G "green", however, is not replaced as it only includes six elements and thus is small.

The discrimination between small and large rings is based on runtime measurements for example during startup or also during the runtime of the data storage system and the according computer program. These measurements are intended to determine the number of datasets from which bitmaps for logical combinations are more economical than other query strategies, like the so-called guide mechanism. Reference is made to aforesaid European patent application No. 03 015 365.4.

For few hits, bitmaps are almost empty and thus uneconomical. For a high number of hits, the guide mechanism is uneconomical because too many guide instances must be individually created and combined. The system can determine the break-even point for the number of elements in a ring and replace all rings that contain more than the break-even number of elements by the bitmaps 7Cr, 7Cb, 7Cy (see Fig. 2). As stated above, in each bitmap one bit represents exactly one dataset in the sequence of the dataset anchor. So if five million datasets are loaded in the data storage system, each bitmap consists of five million bits. In a 32-bit-environment this corresponds to 156250 machine words or to 78125 machine words in a 64-bit-environ-ment. This sums up to 610 kilobytes per bitmap.

Now to give an example, in a bitmap 7Cr for the attribute "color" with the value "red" the bitmap reflects, whether the color "red" appears (bit value = 1) or not (bit value = 0) in a certain dataset.

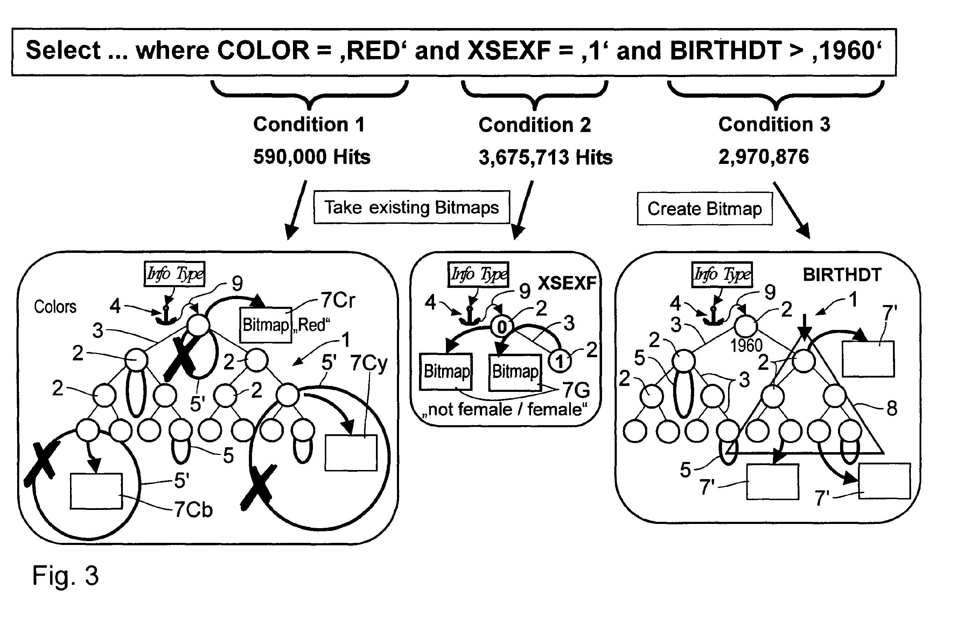

Now Fig. 3 illustrates the way of how a query containing a plurality of attribute conditions is executed. The example query should select all datasets (for example orders for automobiles) for red-colored automobiles sold to women born later than 1960. Accordingly the example query consists of condition 1 (color = "red"), condition 2 (gender is female / XSEXF = "1") and condition 3 (birthdate BIRTHDT > "1960").

As explained in the previous applications taken into reference the three attributes color, gender and birthdate are arranged in respective attribute trees with element counters which easily and fast give the number of hits for each individual condition. In the example query the number of hits for condition 1 is 590,000, for condition 2 is 3,675,713 and for condition 3 is 2,970,876. The number of hits concerning all three conditions is high enough to evaluate the query with the help of bitmaps.

In this connection the bitmaps 7Cr, 7G for color = "red" on the one hand and XSEXF = "1" on the other hand are static bitmaps which are already existing and stored in an according memory of the data storage system.

Now as is shown in Fig. 3, lower part the bitmaps 7Cr, 7G for the first two conditions "color" and "gender" already exist and are used directly. By descending through the corresponding attribute tree the required bitmaps 7Cr, 7G for the color "red" and the gender "female" can be located very quickly. In particular the attribute XSEXF for the gender is only a flag with the two values 0 and 1 inasmuch the attribute tree consists of only two nodes with enormous rings which are now replaced by the bitmaps 7G.

For the third condition, a start pointer 9 from anchor 4 is used in the attribute tree 1 for the birthdate BIRTHDT to identify one or more subtrees 8 with valid hits for the condition "> 1960". To fulfill this condition all nodes lying to the right of the node with the value "1960" are to be found and associated to bitmaps, or to rings so small that a bitmap is not effective. Finally a node might have no ring, because the relevant value appears only once.

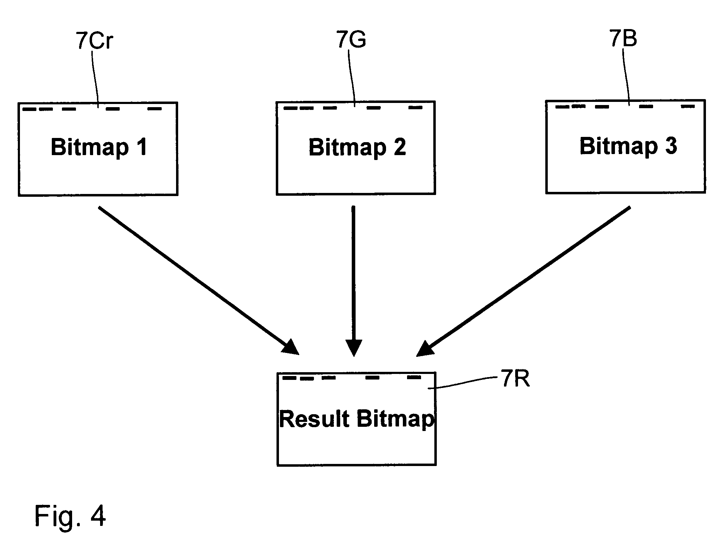

Now to create a bitmap 7B (Fig. 4) for the subtree 8 that contains the nodes which satisfy the condition ">1960", all the bitmaps 7' of the subtree 8 must be logically combined with OR (this occurs machine-word-wise). Furtheron the bits of the small rings and the nodes without rings must be set to 1.

In this way finally three bitmaps 7Cr, 7G, 7B are reached, one for each condition, as is shown in Fig. 4. These three bitmaps are now combined with the logical operator AND bit by bit in units of machine words, as the CPU can logically combine two machine words in one clock cycle. From this combination of the three bitmaps 7Cr, 7G, 7B for the individual conditions we get a result bitmap 7R, in which all those bits are set to 1 that correspond to datasets that satisfy all three conditions 1, 2 and 3. The dataset or - speaking in the terminology of the applicant - DataCourse satisfying all the conditions is represented by the position in the bitmap and can be retrieved by usual memory mapping.

Now as can readily be realized in connection with the static bitmaps 7Cr, 7G on the one hand and the dynamic bitmap 7B on the other hand there might be the problem that calculating the dynamic bitmap 7B for the condition "> 1960" is runtime-consuming and extensive. Now in case the query just alters the condition 1 from color = "red" to color = "green" the extensive process to determining the dynamic bitmap for the condition "> 1960" must be repeated. This is avoided by the invention inasmuch, as the dynamic bitmap 7B is stored in a cache memory (not shown) of the data storage system. Thus the dynamically calculated resulting bitmap 7B for the condition "> 1960" is not just "thrown away", but kept for a while to be used in future queries.

This calculated bitmap data structure is preferably linked to an attribute tree representing a data entity of said attribute, like the subtree 8 of the attribute tree 1 in Fig. 3 representing the birthdate > 1960. Furtheron the dynamically calculated bitmaps can be placed in a separate tree like search structure, which for example is sorted by a combination of operator and value, e.g. "> 1960".

Now to determine the frequency of use of a certain dynamic bitmap cache stored in an according memory the method according to the invention uses a linear list preferably following an LRU-(least-recently-used-)principle, in which the most frequently used bitmaps can be found at the top of the list and the less frequently used bitmaps go steadily down the list until they reach the end and are removed from the list. This LRU-list is superimposed onto the above mentioned treelike search structure so a fast access to the system and to the cache memory is guaranteed.

## Claims

1. A computer implemented method for storing data in and retrieving data from a data storage system, comprising
- calculating a dynamic bitmap data structure (7B) for at least one result set of a defined query condition concerning a data attribute included in a first query,
- storing said calculated bitmap data structure (7B) associated to said defined query condition in a cache memory of said data storage system, and
- accessing to said calculated bitmap data structure (7B) stored in said cache memory means to process at least a second query including said defined query condition.

2. A method according to claim 1, wherein said calculated bitmap data structure (7B) is linked to an attribute tree (8) representing a data entity of said attribute.

3. A method according to claim 2, wherein existing bitmap data structures (7') linked to subtrees (8) of said attribute tree (1) are merged to a combined bitmap data structure (7B).

4. A method according to claim 1, wherein a plurality of said cache-stored bitmap data structures (7B) are stored in a treelike search structure.

5. A method according to claim 4, wherein said cache-stored bitmap data structures (7B) are registered in a linear list superimposed onto said treelike search structure.

6. A method according to claim 5, wherein said cache-stored bitmap data structures (7B) are registered in said list following a LRU- (least-recently-used-)principle.

7. A computer program product for storing data in and retrieving data from a data storage system comprising a plurality of instructions that when loaded into a memory of the data storage system cause at least one processor of the data storage system to execute the steps of any of claims 1 to 6.

8. A data storage system comprising
- at least one processor as control and central processing unit,
- a program and primary memory associated to said processor,
- an interface to receive a query defining a query condition concerning a data attribute and to output a result of said query to a user,
- a data memory to store data, at least part of which is a cache memory to store and retrieve calculated bitmap data structures implementing the method according to one of claims 1 to 6.
